# EUROPEAN PATENT SPECIFICATION

(11) **EP 2 242 785 B1**
(45) Date of publication and mention of the grant of the patent: **29.08.2012**
(21) Application number: 09702044.0
(22) Date of filing: 14.01.2009
(51) Int. Cl.: C08G 59/14, C08G 59/18, C08G 59/42, C09D 163/00

(54) **WATER-BORNE EPOXY RESIN SYSTEMS**
WÄSSRIGE EPOXIDHARZSYSTEME
SYSTÈMES DE RÉSINES ÉPOXY À BASE D'EAU

(30) Priority: 15.01.2008 EP 08000642
(43) Date of publication of application: 27.10.2010
(73) Proprietor: Cytec Austria GmbH, 8402 Werndorf (AT)
(72) Inventor: FEOLA, Roland, 8045 Graz (AT)
(74) Representative: Deckers, Hellmuth Alexander
(86) International application number: PCT/EP2009/050394
(87) International publication number: WO 2009/090196

(56) References cited:
- EP-A- 0 230 292
- EP-A- 1 413 612
- EP-A- 1 454 935
- EP-A- 1 647 584
- EP-A- 1 803 760

## Description

The present invention is directed to a water-borne epoxy resin system, specifically a two-pack system comprising an epoxy resin-based binder and a curing agent which is an adduct of an epoxy resin and an acid.

Generally, epoxy resins are cured (also referred to as "hardened") with amines which are usually multifunctional, with phenols, or with acid anhydrides. Particularly in powder coatings, acidic polyesters having a plurality of unreacted carboxyl groups find use as curing agents. Acids themselves are not recognised as epoxy curing agents.

Two-pack coating compositions based on aqueous epoxy resins and aqueous aminic curing agents which may be used in the formulation of coating compositions for metal and mineralic substrates such as concrete have been disclosed in EP 1 803 760 A1.

It has been found in the experiments underlying the present invention that adducts A of epoxy resins having at least one epoxide group per molecule and of multifunctional (polybasic) acids having at least two acidic hydrogen groups per molecule can be used as curing agents in a two-pack composition for epoxy resins B, particularly for water-borne epoxy resins, i. e. emulsions or dispersions of epoxy resins having at least one epoxide group per molecule, in water or in a mixture of water and further constituents, such as additives to improve film forming, to prevent settling of pigments, to inhibit or reduce foaming, and the like, and coalescence agents such as organic water-miscible solvents. Suitable multifunctional acids can be multifunctional inorganic or organic acids, and polymeric or oligomeric acids such as acidic oligomeric polyesters, acidic oligomeric polyurethanes, and acidic oligomeric vinyl or acrylic copolymers. Among the inorganic and organic acids, strong acids such as phosphorus based acids are particularly preferred, but it is also possible to use organic sulphonic acids, and organic phosphonic acids. The preparation of well-defined adducts of phosphorus based acids and epoxy resins prepared in two reaction steps has been described in European Patent 1 413 612 B1. Such adducts can be used in physically drying coating compositions, or they can be cured by addition of curing agents that react with hydroxyl groups, at elevated temperature, such as aminoplast curing agents or blocked (capped) isocyanates. It has been found that among all acidic curing agents described supra, these adducts are particularly useful as curing agents for epoxy resins, particularly for water-borne epoxy resins, and it has also been found, surprisingly, that mixtures of these adducts A of phosphorus based acids and epoxy resins as curing agents and water-borne epoxy resins B as curable binders lead to coating compositions providing outstanding corrosion protection on substrates such as base metals, plastics, and mineralic substrates, and having unexpectedly long pot life which is at least 4 hours, preferably at least 6 hours, and particularly preferred even in excess of 8 hours. A further preferred application of such mixtures is in coating of concrete, as primer. Such primers for green concrete are used to increase the water retention during the setting and hydraulic hardening period of concrete when hydrates such as calcium silicate hydrate or calcium aluminate hydrate are formed, and to provide improved adhesion for the coating layer which is frequently based on epoxy resin systems as these offer a combination of hardness, mechanical and chemical resistance needed, i. a., for flooring applications.

The invention relates therefore to two-pack coating compositions comprising epoxy resins B having at least one epoxide group per molecule, and adducts A of epoxy resins **A1** having at least one epoxide group per molecule and of multifunctional A2 acids having at least two acidic hydrogen groups per molecule, wherein the multifunctional acids A2 are addition products of epoxy functional compounds A21 having at least one epoxide group per molecule, and acids A22 selected from the group consisting of inorganic acids derived from phosphorus or from sulphur, and of organic acids derived from phosphorus or from sulphur.

The invention relates further to such two-pack coating compositions wherein the multifunctional acids A2 have phosphorus-based acid groups.

A preferred embodiment are such two-pack coating compositions wherein the multifunctional acids A2 are addition products of phosphoric acid and epoxy functional compounds A21 having at least one epoxide group per molecule.

Those two-pack coating compositions are further preferred wherein the mass ratio of the epoxy resins B to the adducts A is from 9:1 to 1:1.

The invention also relates to a process to prepare the said two-pack coating compositions, comprising the steps of
- charging a solution of an epoxy resin **A1** in an organic water-miscible solvent,
- adding thereto an addition product **A2** of an epoxy functional compound **A21** having at least one epoxide group per molecule, and an acid **A22**
- reacting the mixture until the epoxide groups are consumed, to form an adduct **A,**
- mixing the adduct **A** to an epoxy resin **B.**

It is preferred in this process to neutralise the adduct **A** with a tertiary amine and then disperse in water, and then mix with an aqueous dispersion of an epoxy resin **B.**

The invention also relates to a method of use of the said two-pack coating composition, comprising applying the coating composition to a substrate selected from the group consisting of green concrete, plaster, stone, wood, particle boards, and base metals.

It is preferred to apply the said coating composition to green concrete before the onset of hydraulic hardening.

The mixture of products and educts (starting materials) resulting from the reaction comprises these adducts **A** of epoxy resins **A1** and reaction products **A2** of epoxy resins **A21** with multifunctional acids **A22.** These acids **A22** are preferably sulphur- or phosphorus-derived acids. The said mixture preferably comprises a mass fraction of not more than 5 % of unreacted acid **A22.**

The reaction products **A2** contain at least one acid group per molecule which is preferably an acidic ester group, particularly preferably a phosphoric ester group or phosphonic ester group. These acid groups, which are preferably derived from partially esterified acids, particularly preferably phosphonic or phosphoric ester groups, have at least one, preferably at last two, acidic hydrogen atoms in their molecules.

The adducts **A** are preferably based on epoxy resins **A1** and **A21** derived from bisphenol A, or such epoxy resins and **A21** having each a mass fraction of at least 30 % of bisphenol A derived moieties, and preferably have an acid number of from about 10 mg/g to about 70 mg/g. The adducts **A** are substantially free from epoxide groups, i.e., their specific epoxide group content is generally not more than 100 mmol/kg, preferably not more than 50 mmol/kg, and in particular not more than 20 mmol/kg. The adducts **A** preferably have a Staudinger index of from 8.0 cm³/g to 20.0 cm³/g, more preferably from 9.0 cm³/g to 18.0 cm³/g, and in particular from 10 cm³/g to 17 cm³/g.

It is also possible to use adducts **A** made from novolak based epoxy resins and organic phosphonic or sulphonic acids, in which case it is possible to have a higher residual epoxy functionality than when using bisphenol A-derived epoxy resins, and an acid number in the range of from 10 mg/g to 150 mg/g, preferably of from 15 mg/g up to 130 mg/g.

The acid number is defined in accordance with DIN 53 402 as the ratio of the mass ***m***_{KOH} of potassium hydroxide required to neutralise a sample under analysis to the mass ***m***_{B} of said sample (mass of the solids in the sample in the case of solutions or dispersions); its customary unit is "mg/g".

The formerly so-called "intrinsic viscosity number", called "Staudinger index" ***J***_{g} in accordance with DIN 1342, part 2.4, is the limiting value of the Staudinger function ***J***ᵥ at decreasing concentration and shear stress, ***J***ᵥ being the relative change in viscosity divided by the mass concentration β_{B} = ***m***_{B}/***V*** of the dissolved substance B (with the mass ***m***_{B} of the substance B in the volume ***V*** of the solution), i.e., ***J***ᵥ = (ηᵣ, - 1)/β_{B}. Here, ηᵣ, - 1 denotes the relative change in viscosity, i.e., ηᵣ - 1 = (η - ηₛ)/ηₛ. The relative viscosity ηᵣ is the ratio of the viscosity η of the solution under analysis to the viscosity ηₛ of the pure solvent. (The physical definition of the Staudinger index is that of a specific hydrodynamic volume of the solvated polymer coil at infinite dilution and in quiescent state.) The unit commonly used for ***J*** is "cm³/g"; formerly often "dl/g". The Staudinger index is here determined in dimethylformamide as solvent.

The epoxy resins **A1** and **A21** are selected independently of one another from diepoxide or polyepoxide compounds which are obtainable conventionally by reacting epichlorohydrin with aromatic or (cyclo)aliphatic compounds having two or more hydroxyl groups per molecule (Taffy process) or can be obtained by reacting diepoxides or polyepoxides with said aromatic or (cyclo)aliphatic compounds having two or more hydroxyl groups per molecule (advancement reaction). Esters of glycidyl alcohol with polyfunctional acids and diepoxides derived from diolefins, preferably alpha,omega-diolefins, can also be used. By "independently of one another" it is meant that **A1** may be one item of all possible items, while **A21** may be the same or any other item. It goes without saying that both **A1** and **A21** may also be, independently of one another, mixtures of two or more of these items. Preference is given to epoxy resins based on aromatic dihydroxy compounds, such as bisphenol A, bisphenol F, dihydroxybenzophenone, dihydroxydiphenyl sulfone, hydroquinone, resorcinol, 1,4-bis[2-(4-hydroxyphenyl)-2-propyl]benzene, aromatic trihydroxy compounds such as those made by reacting phenols or substituted phenols with aromatic hydroxyaldehydes such as salicylic aldehyde, or tetrahydroxy compounds such as those made by reacting a dialdehyde such as glyoxal with phenols or substituted phenols, or aliphatic dihydroxy compounds such as hexane-1,6-diol, butane-1,4-diol, cyclohexane dimethanol, or oligo-propylene and polypropylene glycol having average degrees of polymerisation of between 3 and 40. As already mentioned supra, it is also possible to use epoxy resins derived from novolaks, such as those derived from phenol or cresol novolaks. Mixtures of at least two of the epoxy resins mentioned supra can of course also be used. The specific epoxide group content of the epoxy resins, independently of one another for the epoxy resins **A1** and **A21,** is in each case preferably from 0.4 mol/kg to 7 mol/kg, in particular from 0.6 mol/kg to 6 mol/kg. In one preferred embodiment diepoxide compounds are used both for **A1** and **A21.** Particular preference is given to epoxy resins based on bisphenol A and bisphenol F and also mixtures thereof.

As acid component **A22** it is possible to use inorganic acidic phosphorus compounds **A221** or organic phosphonic acids **A222,** each having at least two acidic hydrogen atoms, which are attached directly or by an oxygen atom to a phosphorus atom. The inorganic phosphorus-derived acids **A221** are selected from orthophosphoric acid H₃PO₄, diphosphoric acid H₄P₂O₇, triphosphoric acid H₅P₃O₁₀, and the higher homologues (oligomers), phosphorous acid H₃PO₃, diphosphorous acid H₄P₂O₅, and higher homologues thereof, and also hypophosphorous acid H₃PO₂ and its higher homologues. Particularly suitable are orthophosphoric acid, mixtures of dimers and higher oligomers of orthophosphoric acid, phosphorous acid, and higher oligomers thereof. The organic phosphonic acids **A222** are, in particular, alkanephosphonic acids R¹-PO₃H₃, aromatic phosphonic acids R²-PO₃H₃, and the corresponding phosphonous acids R¹-PO₂H₂ and R²-PO₂H₂, R¹ being a linear, branched or cyclic alkyl radical having 1 to 20 carbon atoms and R² being a substituted or unsubstituted aromatic radical having 6 to 20 carbon atoms. Particularly suitable are methanephosphonic acid and benzenephosphonic acid. As mentioned before, it is also possible to use polyfunctional sulphonic acids **A223,** and mixtures of these with the phosphorus derived acids mentioned here. Such acids **A223** can preferably be selected from the group consisting of benzene 1,2- and 1,3-disulphonic acids, naphthalene 1,5- and 2,6-disulphonic acids, p,p'-diphenyl disulphonic acid, and p,p'-diphenylether disulphonic acid, and also from mixed carboxylic and sulphonic acids having at least two acidic hydrogen atoms such as sulphoisophthalic acid.

The epoxy resins **B** which can be used for the invention are preferably water-borne resins, particularly those resins that are internally emulsified by chemically incorporated hydrophilic moieties such as polyoxyalkylene moieties, preferably those derived from oxyethylene groups. Such modified resins are described, i. a., in EP 0 272 595 B1. It is, however, also possible to use such chemically modified hydrophilic epoxy resins as emulsifiers for non-modified epoxy resins, leading to externally emulsified water-borne epoxy resin systems. While the educts, or starting materials, of the epoxy resins **B, A1** and **A21** of such internally or externally emulsified epoxy resin systems are selected from the same group of compounds, viz., preferably glycidyl ethers of polyfunctional phenols or glycidyl esters of polyfunctional acids, they do not have to have the same or similar chemical composition. It is thus possible in the present invention to use a bisphenol A derived epoxy resin as component **A1,** and a bisphenol F derived epoxy resin as component **A21,** by way of example. The diglycidyl ether of bisphenol A, "BADGE", may be used as component **B;** it is also possible to use solid epoxy resins or aqueous dispersions of solid epoxy resins with an emulsifier as explained supra. Other choices for the epoxy resins **B** are epoxy functional acrylic resins obtainable by the copolymerisation of copolymerisable glycidyl esters of olefinically unsaturated acids such as acrylic, methacrylic, maleic, fumaric or crotonic acids, with other vinyl type monomers such as alkyl(meth)acrylates, hydroxyalkyl(meth)acrylates, the free acids, and other monomers such as styrene. Preferably, **B** has a specific content of epoxide groups of from 0.4 mol/kg to 7 mol/kg, in particular from 0.6 mol/kg to 6 mol/kg. If **B** is an aqueously dispersed epoxy resin or a dissolved epoxy resin, the content in epoxide groups is related to the mass of solid epoxy resin in the solution or dispersion.

The epoxy resin systems of the present invention can be made by the following process:

In a first stage of this process an adduct **A2** is prepared from epoxide compounds **A21** and the acids **A22** as detailed supra, each of the starting materials being used in amounts such that the amount-of-substance ratio between acidic hydrogen atoms of the acid **A22** and epoxide groups of the epoxide compounds **A21** is preferably from 0.3 mol/mol to 1.0 mol/mol. The acid number of these adducts **A2** is preferably from 5 mg/g to 200 mg/g, more preferably from 8 mg/g to 180 mg/g, and in particular form 80 mg/g to 120 mg/g. Their Staudinger index ***J***₀ is preferably from 2 cm³/g to 18 cm³/g; more preferably from 3 cm³/g to 16 cm³/g, and in particular from 4 cm³/g to 14 cm³/g. The reaction is preferably conducted in a protic solvent or solvent mixture, the epoxide compound **A21** and the acid **A22** each being dissolved individually in an organic protic solvent. The preferred reaction temperature is between room temperature (20 °C) and 90 °C. Reaction is continued until the acid number remains constant. The specific epoxide group content of the reaction mixture, based on the mass of the solids, is at that point virtually zero. The larger part of the solvent is then preferably removed by distillation under reduced pressure.

Subsequently, in the second stage, the reaction product from this first stage where the adduct **A2** is typically not isolated and separated from unreacted educts, is reacted with epoxide compounds **A1,** the reaction temperature preferably being from 100 °C to 180 °C. This reaction is continued until the specific epoxide group content, based on the mass of the solid resin, is less than 100 mmol/kg.

The reaction product formed, **A,** is then adjusted to the desired mass fraction of solids by adding solvent, or is first neutralised by addition of a volatile base, preferably an amine, and then water is added to obtain the desired mass fraction of solids, and this reaction product, or the adduct **A2** itself, is admixed to an epoxy resin **B** which preferably is aqueously dispersed.

The choice of using either the adduct **A2** or the product **A** of the subsequent reaction of **A2** with further epoxide resin, **A1,** is governed by the compatibility between **A2,** or **A,** on the one side, and the epoxy resin **B,** on the other side. If **A2** has a major content of epoxy resin **A21,** and only little acidic modifier **A22,** and if the epoxy resins **A21** and **B** have a similar chemical composition, compatibility may already be sufficient, and no phase separation is observed. If the chemical composition of **A21** and **B** is different, for example, it is recommended to use the same epoxy resin as in **B** for the formation of reaction product **A,** i. e. as **A1,** alone or at least as a part of the mixture used as **A1,** or at least one which is chemically similar. Of course, it is also possible to use mixed epoxy resins, such as those derived from mixtures of bisphenol A and bisphenol F, for both **B** and **A1.**

In the mixture of **B** and **A,** the amount of substance-ratio of epoxide groups in **B** and acidic hydrogen atoms in **A** is usually from 0.5 mol/mol to 5.0 mol/mol, preferably from 1.0 mol/mol to 2.0 mol/mol.

The mixtures of **A** and **B** are usually prepared immediately before use thereof, and they can be utilised without any deterioration during time periods of up to 10 hours, at least up to 6 hours, after mixing. This long pot life is particularly advantageous in applications for flooring as it coincides with the usual working hours. A mixture prepared in the early morning can thus be uitilised during the whole working day, eliminating the need to prepare fresh mixtures at least twice a day as was the need with compositions according to the state of the art.

The epoxy resin systems according to the present invention dry immediately after application thereof without chemical reaction. The chemical reaction which leads to curing, i. e. the reaction between the acid groups of **A** or **A2** and the epoxide groups of **B,** is apparently slow compared to the curing reaction of epoxy resins with amines, and takes several days to completion. This slow curing apparently also accounts for the long pot life of at least 6 hours of the epoxy resins systems according to the invention.

This long pot life is particularly favourable for the application of the epoxy resins systems according to the invention as primer for green concrete, and for other applications in building. As explained supra, both the increased water retention and the improved adhesion to subsequent coating layers are particularly useful in coating of green concrete. Subsequent coats for flooring, especially industrial flooring, are frequently made with two pack epoxy resin systems which are mostly pigmented and filled, and also comprise ground quartz to increase the surface roughness of the flooring. The improvement in adhesion, however, is also an advantage in coating of other mineralic substrates, and of base metals.

The invention is further illustrated by the following examples which are not meant to be limiting. All quantities with the unit "%" (concentrations) in the examples and the specification are mass fractions (cg/g), if not specified otherwise. The word "specific" denotes an extensive physical quantity of a substance or mixture of substances, divided by its mass.

### Example 1: Preparation of Adduct D1

### 1.1 Epoxy Resin E1

A mixture of 380 g (*n*_{EP} = 2,0 mol) of a commercial epoxy resin based on bisphenol A diglycidyl ether having a specific content of epoxide groups of 5.26 mol/kg ("EP1"; "epoxy equivalent weight EEW" of 190 g/mol), 194 g of bisphenol A (0.85 mol) und 108 g (n_{EP} = 0.31 mol) of a commercial epoxy resin ("EP3", ®Cardolite NC-514, supplier Cardanol Co., specific content of epoxide groups of 2,86 mol/kg; "epoxy equivalent weight" of appr. 350 g/mol) was heated under stirring to 120 °C). 1.2 g of triphenyl phosphine were added as catalyst, upon which an exothermic reaction started. The reaction mixture was held at 140 °C until the specific epoxide group content in the mixture was between 1.0 mol/kg and 1.05 mol/kg (EEW beteen 950 g/mol and 1000 g/mol). The resulting epoxy resin E1 had a Staudinger-Index ***J***₀ of 10.2 cm³/g. The mixture was then cooled to 115 °C and diluted by addition of methoxypropanol to a mass fraction of solids of 80 %. Mass fraction of solids was determined as generally done as the ratio of the dry residue of a sample dried at 125 °C during one hour and the mass of the sample before drying.

### 1.2 Phosphorus acid component P1

An adduct P1 of phosphoric acid and epoxy resin was made in a three step process, wherein in the first step, a mixture was prepared of 102 g of isopropanol and 190 g (n_{EP} = 1.0 mol) of the epoxy resin EP 1 (see 1.1) in a suitable stirred reactor. ***n***_{EP} stands for the amount of substance of epoxide groups. In a second vessel, as a second step, a mixture of 26 g (0.2 mol) of phosphoric acid (75 % strength aqueous solution) and 30 g of isopropanol were heated to 50 °C). Under thorough stirring, the mixture of step 1 was added to this mixture of step 2 during one hour while keeping the temperature at 50 °C by temporary cooling. When the addition was complete, the reaction mixture was held at 50 °C for two to three further hours until a specific content of epoxide groups of less than 0.1 mol/kg was attained ("EEW" of more than 10 000 g/mol). Finally, further 11 g of isopropanol were added, and the reaction mixture was held at 80 °C until the acid number remained constant. The following analytical data were obtained:

| | |
|---|---|
| mass fraction of solids : | approximately 66 %, |
| Staudinger index ***J***₀ : | 5.9 cm³/g, |
| acid number: | 97 mg/g. |

### 1.3 Adduct D1

852 g of the epoxy resin E1 of Example 1.1 and 435 g of the phosphorus acid component P 1 of Example 1.2 were mixed and heated under stirring to 105 °C. Solvents were removed by distillation under reduced pressure until a mass fraction of solids of 80 % was reached, leaving a highly viscous mass. Temperature was held for one further hour at 105 °C. The reaction product was analysed for its Staudinger index ***J***₀ (13.2 cm³/g) and its content of unreacted epoxide groups (virtually zero). The acid number was 25 mg/g. The reaction product was then cooled to 100 °C, and 35 g of dimethylethanolamine and 750 g of deionised water were added, the resulting mixture was homogenised for one further hour at 70 °C. After removal of the heating jacket, the mixture was further diluted by addition of deionised water until a mass fraction of solids of 39 % was reached.

Further adducts D2 to D4 were made in the same way, kind and quantities of educts (starting materials) are listed infra:

### Example 2: Preparation of Adduct D2

682 g of epoxy resin E1 of Example 1.1 and 287 g of phosphorus acid adduct P1 of example 1.2 were reacted in the same way as in example 1.3 to yield an adduct having a Staudinger index of 13.2 cm³/g, an acid number of 30 mg/g and a phosphorus content, based on the mass of solid resin, of 2.7 %. The reaction product was likewise neutralised and diluted by addition of deionised water to a mass fraction of solids of 39 %.

### Example 3: Preparation of Adduct D3

### 3.1 Epoxy resin E2

380 g of epoxy resin EP1, 194 g of bisphenol A and 96 g of a diepoxide resin based on polypropylene glycol having a specific content of epoxide groups of 3.13 mol/kg ("EEW" of approximately 320 g/mol) were reacted as in example 1.1, to form 670 g of an epoxy resin E2 having a specific content of epoxide groups of 1 mol/kg ("EEW" of approximately 998 g/mol) and a Staudinger index of 9.9 cm³/g.

### 3.2 Adduct D3

682 g of epoxy resin E2 of Example 3.1 and 240 g of phosphorus acid component P1 of Example 1.2 were mixed and reacted in the same way as in Example 1.3. The resulting adduct D3 had a Staudinger index of 12.8 cm³/g, a concentration of phosphorus in the neat resin of 2.4 %, and an acid number of 29 mg/g. The reaction product was likewise neutralised and diluted by addition of deionised water to a mass fraction of solids of 36.5 %.

### Example 4: Preparation of Adduct D4

### 4.1 Epoxy Resin E3

760 g of epoxy resin EP1 (see Example 1.1) were reacted with 228 g of bisphenol A under the conditions of Example 1.1. The resulting epoxy resin (988 g) had a specific content of epoxide groups of 2.11 mol/kg ("EEW" of approximately 475 g/mol), and a Staudinger index of 5.1 cm³/g.

### 4.2 Phosphorus acid component P2

In the first step, 48 g of isopropanol, 152 g (n_{EP} = 0,8 mol) of epoxy resin EP 1, and 50 g (***n***_{EP} = 0,2 mol) of ®Cardura E 10P (Hexion Specialty Chemicals BV) were mixed in a suitable stirred reactor. In step 2, in a second vessel, a mixture of 39 g (0.3 mol) phosphoric acid (as aqueous solution of 75 % strength) and 25 g of isopropanol were heated to 50 °C. Both products were reacted in the same way as described in Example 1.2. The following analytical data were obtained:

| | |
|---|---|
| mass fraction of solids : | approximately 80 %, |
| Staudinger index ***J***₀ : | 5.4 cm³/g, |
| Acid number : | 156 mg/g |

### 4.3 Adduct D4

988 g of epoxy resin E3 of Example 4.1 and 290 g of phosphorus acid component P2 of Example 4.2 were mixed and reacted in the same way as in Example 1.3. The resulting adduct D4 had a Staudinger index of 10.8 cm³/g, a concentration of phosphorus in the neat resin of 2.8 %, and an acid number of 38 mg/g. The reaction product was likewise neutralised and diluted by addition of deionised water to a mass fraction of solids of 33.1 %.

### Example 5 Paints

Paints L1 to L4 were prepared by mixing an aqueous epoxy resin dispersion B (®Beckopox EP 384w/53WAMP, Cytec Surface Specialties Germany GmbH & Co. KG, aqueous dispersion of a solid type 1 bisphenol A based epoxy resin, mass fraction of solids 53 %, dispersed in a mixture of water and methoxypropanol) with the adducts D1 to D4. The ratio of the mass of solids in the dispersion of epoxy resin B to the mass of solids in the adducts D1 to D4 was generally 4 (80/20). The composition of the paints L1 to L4 is listed in Table 1.

**Table 1 Paint Mixture Composition (figures are masses of constituents in g, if not denoted otherwise), and properties**

| **Paint** | | **L 1** | **L 2** | **L 3** | **L4** |
|---|---|---|---|---|---|
| | mass fraction of solids, in % | | | | |
| Adduct 1 (Ex. 1.3) | 39 | 86.0 | | | |
| Adduct 2 (Ex. 2) | 39 | | 86.0 | | |
| Adduct 3 (Ex. 3.2) | 36.5 | | | 92.0 | |
| Adduct 4 (Ex. 4.3) | 33.1 | | | | 101.0 |
| | | | | | |
| Dispersion of Epoxy Resin B | 53 | 16.0 | 16.0 | 16.0 | 16.0 |
| Deionised Water | | 4.0 | 5.0 | 4.0 | 0.0 |
| **Total Mass of Paint Mixture** | | **106.0** | **107.0** | **112.0** | **117.0** |
| Mass Fraction of Solids in the Paint Mixtures, in % | | 39.7 | 39.3 | 37.6 | 35.8 |
| Dynamic Viscosity of the Paint Mixtures, at 23 °C and 100 s⁻¹, in mPa·s | | 1180 | 1670 | 460 | 930 |

These paint mixtures L1 to L4, and for comparison, the adducts themselves, were applied to glass plates with a doctor blade, in a wet film thickness of 200 µm, and dried for 24 hours at room temperature (20 °C) and 50 % relative humidity.

The dried samples were tested for pendulum hardness (60 µm of dry film thickness) and water resistance of these films. Water resistance was judged from the appearance of the films after immersion in deionised water for 5 hours and 24 hours respectively, followed by visual inspection of the coated glass plates, using the following scale:
- 0: clear, no effect visible
- 1: slightly hazy, becomes clear again after 30 minutes
- 2: hazy, becomes clear again after 45 minutes
- 3: hazy film, with tiny cracks, does not heal
- 4: hazy film, with large cracks
- 5: film completely detached

A further test ("water loss") was conducted where green concrete was prepared from 700 g of a dry ready-mixed concrete powder (No. 0 5401 6, Murexin AG, Wiener Neustadt, Austria) and 65 g of water, mixed well and applied in a 10 mm layer into a can lid in the form of a dish. After four hours a preliminary drying, the exposed surface of these concrete slabs in these dishes were coated with a 20 µm layer of the paints L1 through L4 and adducts D1 through D4, for comparison, and their mass was determined immediately after coating, and then after one day, two days, and one week of rest at room temperature (21 °C) at 50 % relative humidity. For comparison, another of these slabs was covered with a polyethylene film, in the usual way. In this case, the water loss was 0.6 % after one day, 1.0 % after two days, and 2.9 % after one week. Needless to say, the additional step of covering with a film is rendered unnecessary if the primer paint according to this invention is applied. The results of these tests are summarised in table 2.

**Table 2 Test Results for Paints**

| Paint | L 1 | L2 | L3 | L4 | D1 | D2 | D3 | D4 |
|---|---|---|---|---|---|---|---|---|
| Pendulum Hardness (König, DIN EN ISO 1522), time in seconds, after: | | | | | | | | |
| 1 day | 47 | 49 | 55 | 56 | 25 | 29 | 36 | 37 |
| 2 days | 69 | 71 | 79 | 82 | 28 | 35 | 38 | 44 |
| 1 week | 80 | 84 | 94 | 98 | 28 | 35 | 43 | 44 |
| 2 weeks | 84 | 86 | 97 | 99 | 30 | 35 | 44 | 46 |
| 4 weeks | 86 | 86 | 98 | 101 | 30 | 36 | 44 | 47 |
| Water Resistance after | | | | | | | | |
| 5 hours | 1 | 1 | 1 | 1 | 2 | 2 | 3 | 2 |
| 24 hours | 2 | 2 | 3 | 2 | 5 | 5 | 5 | 5 |
| Water Loss, measured as weight loss in % | | | | | | | | |
| 1 day | 0.30 | 0.50 | 0.70 | 0.50 | 2.50 | 2.90 | 3.10 | 2.40 |
| 2 days | 0.60 | 0.80 | 1.10 | 0.90 | 4.30 | 4.90 | 5.40 | 4.10 |
| 7 days | 2.20 | 2.70 | 3.30 | 2.90 | 6.10 | 6.10 | 6.20 | 5.70 |

These tests show clearly that a reaction has occurred between the epoxy resin of the dispersion, and the adducts D1 to D4. This is visible in the rise of the pendulum hardness, in the water resistance, and particularly, in the water retention test measured as weight loss.

Similar results have been obtained with a paint L5 using an adduct D5 made from epoxy resin E1 and an acid component S1 made from diphenyldisulphonic acid and epoxy resin EP1 in accordance with Example 1.

## Claims

1. Two-pack coating compositions comprising epoxy resins **B** having at least one epoxide group per molecule, and adducts **A** of epoxy resins **A1** having at least one epoxide group per molecule and of multifunctional **A2** acids having at least two acidic hydrogen groups per molecule, wherein the multifunctional acids **A2** are addition products of epoxy functional compounds **A21** having at least one epoxide group per molecule, and acids **A22** selected from the group consisting of inorganic acids derived from phosphorus or from sulphur, and of organic acids derived from phosphorus or from sulphur.

2. The two-pack coating compositions of claim 1 wherein the multifunctional acids **A2** have phosphorus-based acid groups.

3. The two-pack coating compositions of claim 1 wherein the acids **A22** selected from the group consisting of inorganic acids derived from phosphorus, and of organic acids derived from phosphorus.

4. The two-pack coating compositions of claim 1 wherein the multifunctional acids **A2** are addition products of phosphoric acid and epoxy functional compounds **A21** having at least one epoxide group per molecule.

5. The two-pack coating compositions of claim 1 wherein the adducts **A** have a Staudinger index, measured in accordance with DIN 1342, part 2.4, in dimethylformamide as solvent, of from 8 cm³/g to 20 cm³/g.

6. The two-pack coating compositions of claim 1 wherein the mass ratio of the epoxy resins **B** to the adducts **A** is from 9:1 to 1:1.

7. A process to prepare the two-pack coating compositions of claim 1, comprising the steps of
- charging a solution of an epoxy resin **A1** in an organic water-miscible solvent,
- adding thereto an addition product **A2** of an epoxy functional compound **A21** having at least one epoxide group per molecule, and an acid **A22**
- reacting the mixture until the epoxide groups are consumed, to form an adduct **A,**
- mixing the adduct **A** to an epoxy resin **B.**

8. The process of claim 7 wherein the adduct **A** is neutralised with a tertiary amine and then dispersed in water, and then mixed with an aqueous dispersion of an epoxy resin **B.**

9. A method of use of the two-pack coating composition of claim 1, comprising applying the coating composition to a substrate selected from the group consisting of green concrete, plaster, stone, wood, particle boards, and base metals.

10. The method of claim 9 where the coating composition is applied to green concrete before the onset of hydraulic hardening.

## Patentansprüche

1. Zweikomponenten-Beschichtungszusammensetzungen, umfassend Epoxidharze **B** mit mindestens einer Epoxidgruppe pro Molekül und Addukte **A** von Epoxidharzen **A1** mit mindestens einer Epoxidgruppe pro Molekül und multifunktionellen Säuren **A2** mit mindestens zwei sauren Wasserstoff enthaltenden Gruppen pro Molekül, wobei es sich bei den multifunktionellen Säuren **A2** um Additionsprodukte von epoxyfunktionellen Verbindungen **A21** mit mindestens einer Epoxidgruppe pro Molekül und Säuren **A22** aus der Gruppe bestehend aus anorganischen Säuren, die sich von Phosphor oder Schwefel ableiten, und organischen Säuren, die sich von Phosphor oder Schwefel ableiten, handelt.

2. Zweikomponenten-Beschichtungszusammensetzungen nach Anspruch 1, wobei die multifunktionellen Säuren **A2** auf Phosphor basierende Säuregruppen aufweisen.

3. Zweikomponenten-Beschichtungszusammensetzungen nach Anspruch 1, wobei die Säuren **A22** aus der Gruppe bestehend aus anorganischen Säuren, die sich von Phosphor ableiten, und organischen Säuren, die sich von Phosphor ableiten, ausgewählt sind.

4. Zweikomponenten-Beschichtungszusammensetzungen nach Anspruch 1, wobei es sich bei den multifunktionellen Säuren **A2** um Additionsprodukte von Phosphorsäure und epoxidfunktionellen Verbindungen **A21** mit mindestens einer Epoxidgruppe pro Molekül handelt.

5. Zweikomponenten-Beschichtungszusammensetzungen nach Anspruch 1, wobei die Addukte **A** einen nach DIN 1342, Teil 2.4, in Dimethylformamid als Lösungsmittel gemessenen Staudinger-Index von 8 cm³/g bis 20 cm³/g aufweisen.

6. Zweikomponenten-Beschichtungszusammensetzungen nach Anspruch 1, wobei das Massenverhältnis von Epoxidharzen **B** zu Addukten **A** 9:1 bis 1:1 beträgt.

7. Verfahren zur Herstellung der Zweikomponenten-Beschichtungszusammensetzungen nach Anspruch 1, bei dem man
- eine Lösung eines Epoxidharzes **A1** in ein organisches wassermischbares Lösungsmittel einträgt,
- dazu ein Additionsprodukt **A2** einer epoxyfunktionellen Verbindung **A21** mit mindestens einer Epoxidgruppe pro Molekül und einer Säure **A22** gibt,
- die Mischung umsetzt, bis die Epoxidgruppen verbraucht sind, wobei man ein Addukt **A** erhält,
- das Addukt **A** einem Epoxidharz **B** beimischt.

8. Verfahren nach Anspruch 7, bei dem man das Addukt **A** mit einem tertiären Amin neutralisiert und dann in Wasser dispergiert und dann mit einer wässrigen Dispersion eines Epoxidharzes **B** mischt.

9. Verfahren zur Verwendung der Zweikomponenten-Beschichtungszusammensetzung nach Anspruch 1, bei dem man die Beschichtungszusammensetzung auf ein Substrat aus der Gruppe bestehend aus grünem Beton, Putz, Stein, Holz, Spanplatten und unedlen Metallen aufbringt.

10. Verfahren nach Anspruch 9, bei dem man die Beschichtungszusammensetzung vor dem Einsetzen der hydraulischen Härtung auf grünen Beton aufbringt.

## Revendications

1. Compositions de revêtement à deux composants comprenant des résines époxy B ayant au moins un groupe époxyde par molécule et des adduits A de résines époxy A1 ayant au moins un groupe époxyde par molécule et d'acides multifonctionnels A2 ayant au moins deux groupes hydrogène acides par molécule, dans lesquelles les acides multifonctionnels A2 sont des produits d'addition de composés à fonctions époxy A21 ayant au moins un groupe époxyde par molécule et d'acides A22 choisis dans le groupe constitué d'acides minéraux dérivés du phosphore ou du soufre et d'acides organiques dérivés du phosphore ou du soufre.

2. Compositions de revêtement à deux composants selon la revendication 1, dans lesquelles les acides multifonctionnels A2 comprennent des groupes acides à base de phosphore.

3. Compositions de revêtement à deux composants selon la revendication 1, dans lesquelles les acides A22 sont choisis dans le groupe constitué d'acides minéraux dérivés du phosphore et d'acides organiques dérivés du phosphore.

4. Compositions de revêtement à deux composants selon la revendication 1, dans lesquelles les acides multifonctionnels A2 sont des produits d'addition de l'acide phosphorique et des composés à fonctions époxy A21 ayant au moins un groupe époxyde par molécule.

5. Compositions de revêtement à deux composants selon la revendication 1, dans lesquelles les adduits A ont un indice de Staudinger, mesuré selon DIN 1342, partie 2.4, dans du diméthylformamide en tant que solvant, de 8 cm³/g à 20 cm³/g.

6. Compositions de revêtement à deux composants selon la revendication 1, dans lesquelles le rapport en masse des résines époxy B aux adduits A est de 9:1 à 1:1.

7. Procédé de préparation des compositions de revêtement à deux composants selon la revendication 1, comprenant les étapes suivantes :
- le chargement d'une solution d'une résine époxy A1 dans un solvant organique miscible avec l'eau,
- l'addition à celle-ci d'un produit d'addition A2 d'un composé à fonctions époxy A21 ayant au moins un groupe époxyde par molécule et d'un acide A22,
- la réaction du mélange jusqu'à ce que les groupes époxyde soient consommés, pour former un adduit A,
- le mélange de l'adduit A avec une résine époxy B.

8. Procédé selon la revendication 7, dans lequel l'adduit A est neutralisé avec une amine tertiaire et ensuite dispersé dans de l'eau, et ensuite mélangé avec une dispersion aqueuse d'une résine époxy B.

9. Procédé d'utilisation de la composition de revêtement à deux composants selon la revendication 1, comprenant l'application de la composition de revêtement sur un substrat choisi dans le groupe constitué de béton vert, de plâtre, de pierre, de bois, de panneaux d'agglomérés et de métaux de base.

10. Procédé selon la revendication 9, dans lequel la composition de revêtement est appliquée sur du béton vert avant le début du durcissement hydraulique.
